# EUROPEAN PATENT SPECIFICATION

(11) **EP 3 483 409 B1**
(45) Date of publication and mention of the grant of the patent: **11.11.2020**
(21) Application number: 18000762.7
(22) Date of filing: 25.09.2018
(51) Int. Cl.: F02B 51/06, F23K 5/00

(54) **DEVICE FOR OPTIMIZING THE COMBUSTION OF HYDROCARBONS**
VORRICHTUNG ZUR OPTIMIERUNG DER VERBRENNUNG VON KOHLENWASSERSTOFFEN
DISPOSITIF POUR OPTIMISER LA COMBUSTION D'HYDROCARBURES

(30) Priority: 14.11.2017 IT 201700129648
(43) Date of publication of application: 15.05.2019
(73) Proprietor: M.E.S. S.R.L., 16011 Arenzano (GE) (IT)
(72) Inventor: Miraglia, Francesco, I-16011 Arenzano (GE) (IT)
(74) Representative: Garavelli, Paolo

(56) References cited:
- DE-A1- 2 814 405
- DE-A1- 10 250 483
- DE-A1-102004 061 213
- JP-A- 2001 263 180
- JP-A- 2010 007 578
- US-A- 4 237 836
- US-A1- 2003 221 678
- US-A1- 2007 272 220
- US-A1- 2011 265 737

## Description

The present invention refers to a device for optimizing the combustion of hydrocarbons.

In particular, the present invention refers to apparatuses for treating mixtures of combustion air, fuel or fuel-air, through catalysts, electric means, magnetisms, rays, sound waves or the like, for ionization or polarization.

The prior art is given by patent application US 2005/0208442 A1 dealing which a plasma jet reactor wherein a mixture of gases composed of N2 and O2 flows through a tube and enters in a microwave field. A generator produces microwaves supplied in a wave-guide and reflected at the other end of the wave-guide. The combustion chamber is preferably composed of a cylinder and of a piston of the engine which can move to transmit energy. The internal combustion engine comprises a first electrode and a second electrode, preferably formed of a ground drive cylinder. In an embodiment, an opposite electrode surrounds and coats a glass cylinder composed of insulating material. The inside of the cylinder forms the combustion chamber for the flame. The cylinder is preferably a quartz tube. The flame absorbs the electric charge through the quartz, so that a reactive capacitive current can flow due to the alternate electric field. If the voltage generator applies a continuous voltage to the electrodes, a small current is also formed.

The prior art is also given by patent US-B2-6,802,706, dealing with a device and a method of use of a magnetic field, advantageously of the pulsed type, generated next to a supplying tube for fuel. The interaction of the pulsating magnetic field with the drops of fuel induces vibrations in the individual drops of fuel, allowing to reduce the skin tension in every drop of fuel, which is thereby segmented into a multitude of micro-drops, generating a turbulence at microscopic level. In this way, the molecules of hydrocarbons, entering at a certain speed depending on suction, are rotated onto themselves and along opposite directions, each one with respect to another, allowing to obtain the two desired effects: weakening of the surface tension, breakage of the drops divided into micro-drops and forming the turbulence, according to angular speeds which allow optimizing the interaction of the hydrocarbons with oxygen of air inserted through the supplying tube.

The prior art is also given by patent US-B1-8, 025, 044, dealing with an apparatus for increasing the yield as travelled distance through an internal combustion engine. The apparatus is composed of a tube inserted in a fuel line between a storage tank and the engine, the tube having a plurality of electrodes projecting in a passage of fuel inside the tube. The electrodes are equipped with an electric charge for the transmission of electric charges to molecules of liquid fuel which flow through the passage of fuel of the tube. The tube inserted in a fuel line between a storage tank and an internal combustion engine comprises a plurality of electrodes projecting in a fuel passage inside the tube, the electrodes equipped with an electric charge to impart electric charges to molecules of liquid fuel which flow through the fuel passage along the tube, the electrodes arranged in four rows parallel to a longitudinal axis of the tube and in ten circumferential columns around the tube, the electrodes adjacent along a certain row being provided with electric charges of an alternate polarity. Last but not least, a prior art device for optimizing the combustion of hydrocarbons having the features specified in the preamble of claim 1 is known from the patent application US 2011/0265737 A1.

In spite of these efforts, there remain the need of using alternative devices to improve and optimize the combustion of hydrocarbons.

Object of the present invention is solving the above prior art problems by providing a device for optimizing the combustion of hydrocarbons through the fragmentation of the fuel particles which allows neutralizing the surface tension of drops of fluid.

A further object of the present invention is providing a device for optimizing the combustion of hydrocarbons which allows creating a ultrasound field wherein the flow of fuel fluid is immersed.

Another object of the present invention is providing a device for optimizing the combustion of hydrocarbons which allows coupling a ultrasound field with an axial-symmetric magnetic field to increase the impact of a field of various forces as regards the fluid flow of fuel.

The above and other objects and advantages of the invention, as will appear from the following description, are obtained with a device for optimizing the combustion of hydrocarbons come as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes arrangements and parts with equivalent functionality) can be made to what is described without departing from the scope of the invention as appears from the enclosed claims.

The present invention will be better described by some preferred embodiments thereof, provided as a non-limiting example, with reference to the enclosed drawings, in which:
- Figure 1 shows a schematic view of a preferred embodiment of the device for optimizing the combustion of hydrocarbons, according to the present invention;
- Figure 2 shows a plan view of a first meaningful part of the device for optimizing the combustion of hydrocarbons according to the present invention;
- Figure 3 shows a sectional view along line III-III of the previous Figure;
- Figures 4, 5 and 6 show orthogonal projection views and an axonometric view of a second meaningful part of the device for optimizing the combustion of hydrocarbons according to the present invention;
- Figure 7 shows a front view of a transducer used in the device for optimizing the combustion of hydrocarbons according to the present invention; and
- Figure 8 shows an exploded front view of a third meaningful part of the device for optimizing the combustion of hydrocarbons according to the present invention.

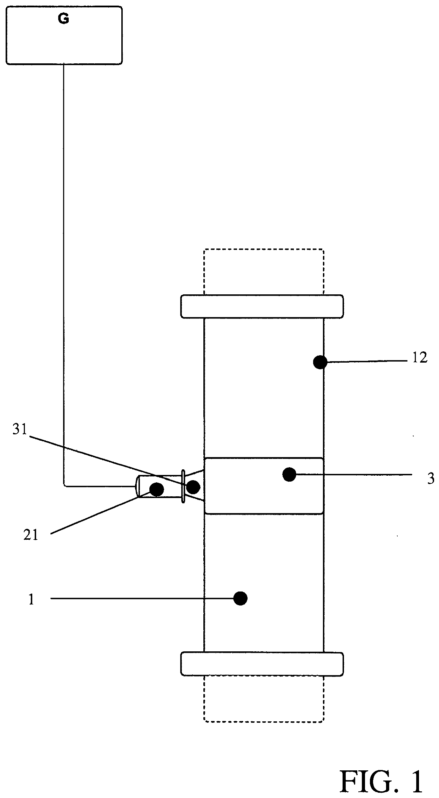

With reference to Figure 1, it is possible to note that a device for optimizing the combustion of hydrocarbons, through induction of vibrations in the particles of fuel, comprises at least one tubular apparatus 1 inserted in a fuel gas line, between at least one storage tank and at least one internal combustion engine.

Advantageously, the device comprises at least one ultrasound generator G to supply a plurality of ultrasound piezoelectric transducers 21 arranged on the tubular apparatus 1.

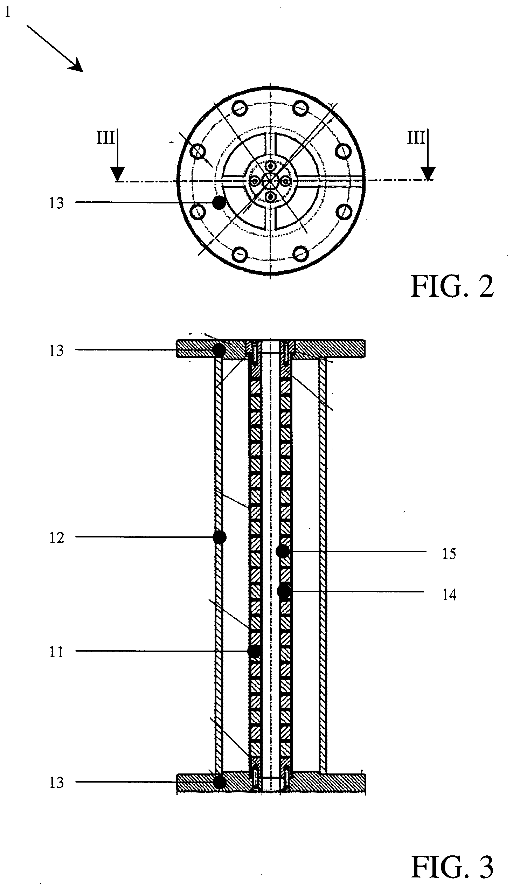

With reference to Figures 2 and 3, it is possible to note that the tubular apparatus 1 is composed of an internal tube 11 coaxial with respect to an external tube 12. The ends of the internal tube 11 and those of the external tube 12 are delimited by a pair of transverse holed flanges 13. The external tube 12 supports the plurality of ultrasound piezoelectric transducers 21.

In particular, the internal tube 11 is composed of a series of tube sections 14 made of ferromagnetic material arranged axially with interposed disks 15 made of soft iron. Preferably, the external tube 12 and the pair of transverse holed flanges 13 are made of stainless steel.

The plurality of ultrasound piezoelectric transducers 21 comprises at least one ultrasound piezoelectric transducer approximately oriented towards the center of the tubular apparatus 1, through an annular band 3 made of stainless steel applied to the tubular apparatus 1.

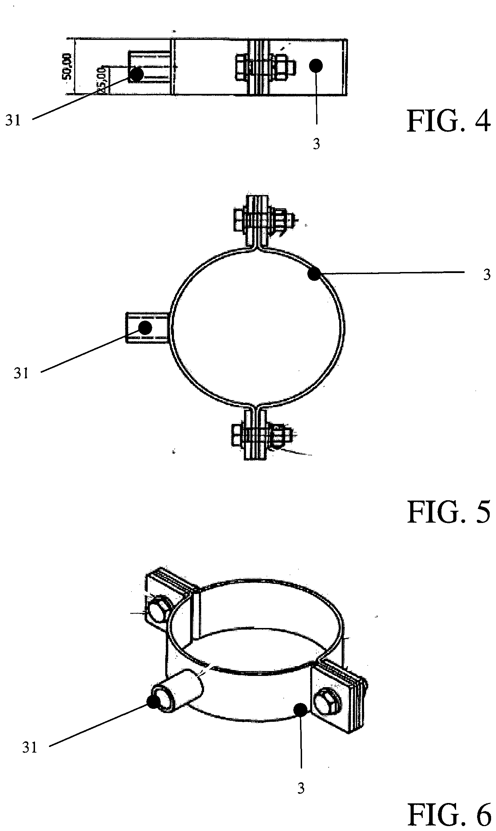

With reference to Figures 4 to 6, each ultrasound piezoelectric transducer belonging to the plurality of ultrasound piezoelectric transducers 21 is connected to its respective annular band 3 through a NPT ½" sleeve 31 made of stainless steel and equipped with a hole with gas threading to block the respective ultrasound piezoelectric transducer 21 and welded to the respective annular band 3.

According to a preferred configuration, not shown, the plurality of ultrasound piezoelectric transducers 21 is formed of six ultrasound piezoelectric transducers arranged along the tubular apparatus 1 and offset on the circumference of the tubular apparatus 1.

From a dimensional point of view, the device for optimizing the combustion of hydrocarbons is preferably composed of a tubular apparatus 1 composed of an internal tube DN80 and an external tube DN125.

Moreover, the ultrasound generator G supplies each ultrasound piezoelectric transducer of the plurality of ultrasound piezoelectric transducers 21 with a 250V electric voltage, at a frequency of 22.5 kHz, for a 50W electric power at 0.200 A, for a total of 300 W and 1.2 A.

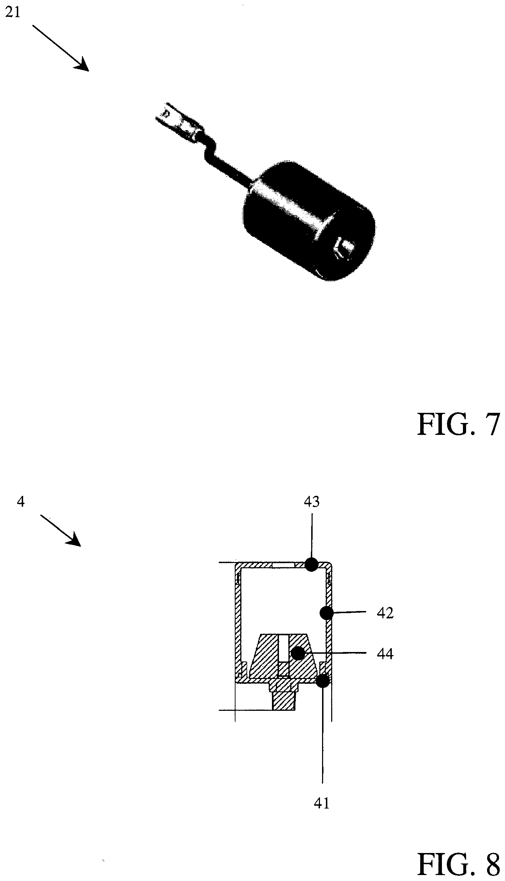

With reference to Figure 8, it is possible to note that each ultrasound piezoelectric transducer, like the one shown in Figure 7, of the plurality of ultrasound piezoelectric transducers 21 is housed in an extension room 4. The extension room 4 is formed of a base 41, an annular wall 42, a holed cover 43 and is equipped therein with a tapered holed head 44.

The device for optimizing the combustion of hydrocarbons of the present invention allows thereby reaching the stated objects.

Mainly, such device allows treating the fuel by reducing the molecular tension of any fuel which crosses it.

The smallest fuel particles are permanently generated in the fuel supply system, allowing to increase the fuel surface in contact with air inside the combustion chamber.

The effects induced by the device for optimizing the combustion of hydrocarbons are: higher efficiency of the combustion process; average reduction equal to 1% of the fuel consumption, reduction of CO; reduction of the generated PM; greater cleaning of hot components in the diesel engine, of the turbine blades in the turbo-compressor, of the detergent in the economizing device.

The device for optimizing the combustion of hydrocarbons only treats the fuel, reducing the molecular tension upon its passage and allowing a bigger amount of O2 to take part in the combustion, in order to burn the higher amount of available fuel, with a reduction of free O2, reduction of the fuel consumption, reduction of solid parts in the atmosphere.

The device for optimizing the combustion of hydrocarbons has no moving parts and can be installed in any position. The piezoelectric transducers are applied outside the tube and have no direct contact with the fuel. According to a preferred configuration, the device for optimizing the combustion of hydrocarbons is composed of:
- 1 device Series OEYK5R0004 with permanent magnets and ultrasound piezoelectric transducers;
- 4 flanges, two on each side, INOX 316 L - PN16 - DN125;
- 4 flange, two on each side, INOX 316 L - PN16 - DN80;
- 2 concentric reductions INOX 316 DN125 - DN80, one on each side;
- 1 electric panel and ultrasound generator, 600x600x250 mm, to supply 6 piezoelectric transducers LEO 50.

The electric panel and the ultrasound generator are composed of:
- 1 metallic cabinet - Ral 6034;
- 1 ultrasound generator IKE 2200 AS 6;
- 1 document-holder;
- 1 door lock, Mod. Rittal 2519.000;
- 1 contact circuit without potential for the remote signal;
- 1 general switch;
- 1 ammeter;
- 1 meter;
- 4 alarm LEDs;
- 1 main switch holder block;
- 1 fan suction filter;
- 2 cooling fans;
- 6 switches for controlling the transducer, with all-on signal;
- protection with automatic switches.

The ultrasound generator is equipped with two alarms: common alarm; ultrasound generator alarm.

ULTRASONIC TRANSDUCERS ALARM mode, to manually determine which transducer is malfunctioning, deactivating the switch of individual transducers till the alarm stops.

To determine the non-operating transducer, it is necessary to turn the selectors off till the alarm stops.

The generator is automatically started.

The operator must replace the faulty transducer without opening the electric panel.

## Claims

1. Device for optimizing the combustion of hydrocarbons, through induction of vibrations in the particles of fuel, comprising at least one tubular apparatus (1) designed to be inserted in a fuel gas line, between at least one storage tank and at least one internal combustion engine, wherein the device comprises at least one ultrasound generator (G) to supply a plurality of ultrasound piezoelectric transducers (21) arranged on said tubular apparatus (1), **characterized in that** said tubular apparatus (1) is composed of an internal tube (11) coaxial with respect to an external tube (12), the ends of said internal tube (11) and said external tube (12) being delimited by a pair of transverse holed flanges (13), said external tube (12) being adapted to support said plurality of ultrasound piezoelectric transducers (21), said internal tube (11) being composed of a series of tube sections (14) made of ferromagnetic material arranged axially with interposed disks (15) made of soft iron, said external tube (12) and said pair of transverse holed flanges (13) being made of stainless steel.

2. Device for optimizing the combustion of hydrocarbons according to claim 1, **characterized in that** said plurality of ultrasound piezoelectric transducers (21) comprise at least one ultrasound piezoelectric transducer approximately oriented towards the center of said tubular apparatus (1), through an annular band (3) made of stainless steel applied to said tubular apparatus (1).

3. Device for optimizing the combustion of hydrocarbons according to the previous claim, **characterized in that** said at least one ultrasound piezoelectric transducer of said plurality of ultrasound piezoelectric transducers (21) is connected to its respective annular band (3) through a ½" NPT sleeve (31) made of stainless steel equipped with hole with gas threading to block the respective ultrasound piezoelectric transducer (21) and welded to the respective annular band (3).

4. Device for optimizing the combustion of hydrocarbons according to any one of the previous claims, **characterized in that** said plurality of ultrasound piezoelectric transducers (21) are formed of six ultrasound piezoelectric transducers arranged along said tubular apparatus (1) and offset on the circumference of said tubular apparatus (1).

5. Device for optimizing the combustion of hydrocarbons according to any one of the previous claims, **characterized in that** said tubular apparatus (1) is composed of an internal tube DN80 and an external tube DN125.

6. Device for optimizing the combustion of hydrocarbons according to any one of the previous claims, **characterized in that** said ultrasound generator (G) supplies each piezoelectric transducer with a 250V electric voltage, at a frequency of 22.5 kHz, for a 50W electric power at 0.200 A, for a total of 300 W and 1.2 A.

7. Device for optimizing the combustion of hydrocarbons according to the previous claim, **characterized in that** each piezoelectric transducer is housed in an extension room (4), said extension room (4) being formed of a base (41), an annular wall (42), a holed cover (43) equipped therein with a tapered holed head (44).

## Patentansprüche

1. Vorrichtung für die Verbrennung von Kohlenwasserstoffen durch die Induktion von Vibrationen in den Kraftstoffpartikeln, die mindestens ein rohrförmiges Gerät (1) enthält, das entwickelt wurde, um zwischen mindestens einem Speichertank und mindestens einem Verbrennungsmotor in eine Brenngasleitung eingesetzt zu werden, wobei die Vorrichtung mindestens einen Ultraschallgenerator (G) für die Versorgung von mehreren piezoelektrischen Ultraschallwandlern (21) enthält, die auf dem genannten rohrförmigen Gerät (1) angebracht sind, die **dadurch gekennzeichnet ist, dass** das genannte rohrförmige Gerät (1) aus einem internen Rohr (11) besteht, das koaxial zu einem externen Rohr (12) liegt, die Enden des genannten internen Rohres (11) und des genannten externen Rohres (12) werden durch ein Paar transversal durchbohrter Flansche (13) begrenzt, das genannte externe Rohr (12) dient dazu, die genannten mehreren piezoelektrischen Ultraschallwandler (21) zu stützen, das genannte interne Rohr (14) besteht aus mehreren Rohrabschnitten (14) aus ferromagnetischem Material, die mittig mit dazwischen angebrachten Platten (15) aus Weicheisen angebracht sind, das genannte externe Rohr (12) und das genannte Paar transversal durchbohrter Flansche (13) bestehen aus Edelstahl.

2. Vorrichtung für die Optimierung der Verbrennung von Kohlenwasserstoffen gemäß Patentanspruch 1, die **dadurch gekennzeichnet ist, dass** die genannten mehreren piezoelektrischen Ultraschallwandler (21) mindestens einen piezoelektrischen Ultraschallwandler enthalten, der durch ein ringförmiges Band (3) aus Edelstahl, das am genannten rohrförmigen Gerät (1) angebracht ist, annäherungsweise in Richtung der Mitte des genannten rohrförmigen Gerätes (1) gerichtet ist.

3. Vorrichtung für die Optimierung der Verbrennung von Kohlenwasserstoffen gemäß dem vorhergehenden Patentanspruch, die **dadurch gekennzeichnet ist, dass** der genannte mindestens eine piezoelektrische Ultraschallwandler der genannten mehreren piezoelektrischen Ultraschallwandler (21) mit dem entsprechenden ringförmigen Band (3) durch eine NPT-Muffe zu ½" (31) aus Edelstahl verbunden ist, die mit einer Gasgewindebohrung ausgestattet ist, um den entsprechenden piezoelektrischen Ultraschallwandler (21) zu blockieren und am entsprechenden ringförmigen Band (3) verschweißt zu werden.

4. Vorrichtung für die Optimierung der Verbrennung von Kohlenwasserstoffen gemäß einem beliebigen der vorhergehenden Patentansprüche, die **dadurch gekennzeichnet ist, dass** die genannten mehreren piezoelektrischen Ultraschallwandler (21) aus sechs piezoelektrischen Ultraschallwandlern bestehen, die längs des genannten rohrförmigen Gerätes (1) angebracht und am Kreisumfang des genannten rohrförmigen Gerätes (1) verschoben sind.

5. Vorrichtung für die Optimierung der Verbrennung von Kohlenwasserstoffen gemäß einem beliebigen der vorhergehenden Patentansprüche, die **dadurch gekennzeichnet ist, dass** das genannte rohrförmige Gerät (1) aus einem internen Rohr DN80 und einem externen Rohr DN125 besteht.

6. Vorrichtung für die Optimierung der Verbrennung von Kohlenwasserstoffen gemäß einem beliebigen der vorhergehenden Patentansprüche, die **dadurch gekennzeichnet ist, dass** der genannte Ultraschallgenerator (G) jeden der genannten piezoelektrischen Wandler mit einer Stromspannung von 250 V, einer Frequenz von 22,5 kHz, für eine elektrische Leistung von 50 W mit 0,200 A, für insgesamt 300 W und 1,2 A versorgt.

7. Vorrichtung für die Optimierung der Verbrennung von Kohlenwasserstoffen gemäß dem vorhergehenden Patentanspruch, die **dadurch gekennzeichnet ist, dass** jeder der genannten piezoelektrischen Wandler in einer Verlängerungsöffnung (4) enthalten ist, die genannte Verlängerungsöffnung (4) besteht aus einer Basis (41), einer ringförmigen Wand (42), einem durchlochten Deckel (43), die in ihrem Inneren mit einem baumstumpf-kegelförmigen durchlochten Kopf ausgestattet ist.

## Revendications

1. Dispositif pour optimiser la combustion d'hydrocarbures à travers l'induction de vibrations dans les particules de carburant, comprenant au moins un appareil tubulaire (1) conçu pour être inséré dans une ligne de gaz combustible, entre au moins un réservoir de stockage et au moins un moteur à combustion interne, où le dispositif comprend au moins un générateur à ultrasons (G) pour alimenter une pluralité de transducteurs piézoélectriques à ultrasons (21) disposés sur l'appareil tubulaire (1) ; **caractérisé en ce que** l'appareil tubulaire (1) est constitué d'un tube interne (11) coaxial par rapport à un tube externe (12) ; les extrémités du tube interne (11) et du tube externe (12) sont délimitées par un couple de brides percées transversales (13) ; le tube externe (12) est apte à soutenir la pluralité de transducteurs piézoélectriques à ultrasons (21) ; le tube interne (11) est composé d'une série de morceaux de tube (14) en matériel ferromagnétique disposés de manière axiale avec l'interposition de disques (15) de fer doux ; le tube externe (12) et le couple de brides percées transversales (13) sont en acier inoxydable.

2. Dispositif pour optimiser la combustion d'hydrocarbures selon la revendication 1, **caractérisé en ce que** la pluralité de transducteurs piézoélectriques à ultrasons (21) comprend au moins un transducteur piézoélectrique à ultrasons tourné approximativement vers le centre de l'appareil tubulaire (1) à l'aide d'une bande annulaire (3) en acier inoxydable appliquée à l'appareil tubulaire (1).

3. Dispositif pour optimiser la combustion d'hydrocarbures selon la revendication précédente, **caractérisé en ce que**, au moins, un transducteur piézoélectrique à ultrasons parmi la pluralité de transducteurs piézoélectriques à ultrasons (21) est relié à la bande annulaire (3) relative à travers un manchon NPT de ½" (31) en acier inoxydable doté d'un trou avec filetage à gaz pour bloquer le transducteur piézoélectrique à ultrasons relatif (21) et soudé à la bande annulaire (3) relative.

4. Dispositif pour optimiser la combustion d'hydrocarbures selon l'une des revendications précédentes **caractérisé en ce que** la pluralité de transducteurs piézoélectriques à ultrasons (21) est formée de six transducteurs piézoélectriques à ultrasons disposés le long de l'appareil tubulaire (1) et décalés sur la circonférence de l'appareil tubulaire (1).

5. Dispositif pour optimiser la combustion d'hydrocarbures selon l'une des revendications précédentes **caractérisé en ce que** l'appareil tubulaire (1) est constitué d'un tube interne DN80 et d'un tube externe DN125.

6. Dispositif pour optimiser la combustion d'hydrocarbures selon l'une des revendications précédentes **caractérisé en ce que** le générateur à ultrasons (G) alimente chaque transducteur piézoélectrique avec une tension électrique de 250 V, à une fréquence de 22,5 kHz, pour une puissance électrique de 50 W à 0,200 A, pour un total de 300 W et 1,2 A.

7. Dispositif pour optimiser la combustion d'hydrocarbures selon la revendication précédente, **caractérisé en ce que** chaque transducteur piézoélectrique possède un compartiment d'extension (4) ; le compartiment d'extension (4) est formé d'une base (41), d'une paroi annulaire (42), d'un couvercle percé (43) doté à l'intérieur d'une tête percée tronco-conique (44).
